# EUROPÄISCHE PATENTSCHRIFT

(11) **EP 1 161 474 B1**
(45) Veröffentlichungstag und Bekanntmachung des Hinweises auf die Patenterteilung: **28.04.2004**
(21) Anmeldenummer: 00906260.5
(22) Anmeldetag: 01.02.2000
(51) Int. Cl.: C08G 18/36, C08G 18/66

(54) **FEINZELLIGE, WASSERGETRIEBENE POLYURETHANHARTSCHAUMSTOFFE**
FINE-CELL, WATER-DRIVEN RIGID EXPANDED POLYURETHANES
MOUSSES RIGIDES DE POLYURETHANE A PETITS ALVEOLES, ENTRAINABLES PAR L'EAU

(30) Priorität: 13.02.1999 DE 19905989
(43) Veröffentlichungstag der Anmeldung: 12.12.2001
(73) Patentinhaber: Bayer MaterialScience AG, 51368 Leverkusen (DE)
(72) Erfinder: HEINEMANN, Torsten, D-53721 Siegburg (DE); KLÄN, Walter, D-51373 Leverkusen (DE)
(86) Internationale Anmeldenummer: PCT/EP2000/000783
(87) Internationale Veröffentlichungsnummer: WO 2000/047647

(56) Entgegenhaltungen:
- EP-A- 0 672 697
- EP-A- 0 826 706
- WO-A-95/02620
- GB-A- 2 324 798
- US-A- 5 916 480

## Beschreibung

Die Erfindung betrifft ein Verfahren zur Herstellung von wassergetriebenen feinzelligen, Urethan- und/oder Isocyanuratgruppen aufweisenden Hartschaumstoffen durch Umsetzung von Polyisocyanaten mit einer als Emulsion vorliegenden Polyolkomponente. Ferner betrifft die Erfindung formschäumbare offenzellige Polyurethanschaumstoffe.

Polyurethanhartschäume werden entsprechend dem Stand der Technik aus Polyolen mit im Mittel mindestens drei Hydroxylgruppen pro Molekül, mindestens difunktionellen Isocyanaten, Katalysatoren, Treibmitteln und Polysiloxan-Polyoxyalkylen-Blockmischpolymerisaten sowie gegebenenfalls üblichen Zusatzstoffen hergestellt.

Eine zusammenfassende Darstellung des Stands der Technik, der verwendeten Rohstoffe und anwendbaren Verfahren findet sich in G. Oertel (Hrsg.): "Kunststoffhandbuch", Band VII, C. Hanser Verlag, München, 1983, in Houben-Weyl: "Methoden der organischen Chemie", Band E20, Thieme Verlag, Stuttgart 1987, S. 1561 bis 1757, und in "Ullmann's Encyclopedia of Industrial Chemistry" Vol. A21, VCH, Weinheim, 4. Auflage 1992, S. 665 bis 715.

Im allgemeinen verwendet man Polyetherpolyole oder Polyesterpolyole oder Mischungen derselben, wobei in der verwendeten Polyolmischung im Mittel mindestens drei Hydroxylgruppen je Molekül vorhanden sind und die Hydroxylzahl der verwendeten Polyolmischung zwischen 100 und 900 liegt.

Die entstehenden Polyurethanhartschaumstoffe sind meistens überwiegend geschlossenzellig. Ihr Raumgewicht beträgt zwischen 5 bis 950 kg·m⁻³, meist zwischen 10 und 350 kg·m⁻³, wobei besonders häufig Raumgewichte zwischen 20 und 70 kg·m⁻³ zum Einsatz kommen.

Neuere Entwicklungen auf dem Gebiet der Polyurethanhartschäume betreffen die gezielte Herstellung von weitgehend offenzelligen Polyurethan- oder polyisocyanuratmodifizierten Polyurethanhartschaumstoffen, die als Isoliermaterialien z.B. in Vakuumpaneelen eingesetzt werden. Für die Verwendung der genannten offenzelligen Hartschäume in Vakuumpaneelen ist ein möglicht geringer Zelldurchmesser von besonderer Bedeutung, da hiervon die Effizienz der Dämmung bestimmt wird. Je geringer der Zelldurchmesser, desto weniger muß evakuiert werden, um eine definierte Dämmwirkung zu erreichen. Der mittlere Zelldurchmesser der nach Verfahren des Standes der Technik erhaltenen, wassergetriebenen Polyurethanhartschäume liegt üblicherweise oberhalb von 150 µm; Schäume mit einem solchen Zelldurchmesser sind für Vakuumanwendungen üblicherweise nicht geeignet.

Die Herstellung offenzelliger Polyurethan Hartschäume ist prinzipiell bekannt. So beschreibt US-A 5 350 777 die Verwendung von Erdalkalisalzen langkettiger Fettsäuren als Zellöffner.

Aus EP-A 498 628 geht die Herstellung offenzelliger Hartschäume durch die Wirkung eines thermisch aktivierten Treibmittels hervor. Dieses Verfahren weist den Nachteil auf, daß die Schaumzellen lediglich dort geöffnet werden können, wo eine Mindesttemperatur im Verlauf des Schäumprozesses überschritten wird, so daß die erhaltenen Schäume durch das mit dem Schaum ausgefüllte Volumen hindurch keine gleichmäßig hohe Offenzelligkeit aufweisen.

In DE-A 43 03 809 wird ein Verfahren zur Herstellung von Hartschaumstoffen mit erhöhter Offenzelligkeit offenbart, bei dem die zellöffnende Wirkung eines flüssigen Polyolefinzusatzes genutzt wird. Dieses Verfahren besitzt den Nachteil einer engen Anwendungsbreite und den zusätzlichen Nachteil, daß bei höherer Dosierung des Polyolefinzusatzes schnell Zellvergröberung eintritt.

In US-A 5 250 579 und US-A 5 312 846 wird die zellöffnende Wirkung von Substanzen mit einer Oberflächenspannung von weniger als 23 mJ·m⁻² offenbart. Diese weisen den Nachteil auf, daß sie organisch gebundenes Halogen enthalten.

GB-A-2 324 798 offenbarf offenzellige PU-Schäume. Eine unlösliche Fluor-Verbindung wird des Reaktions mischung als Emulsion zugegeben.

Aufgabe der vorliegenden Erfindung war es, ein Verfahren zur Herstellung von wassergetriebenen, feinzelligen und gegebenenfalls offenzelligen Polyurethanhartschäumen zu finden, bei dem die erfindungsgemäßen Polyurethanhartschäume die gewünschten Endeigenschaften - Offenzelligkeit und Feinzelligkeit - auch bei einer Formverschäumung beibehalten.

Es wurde nun gefunden, daß bei Verschäumung eines Polyisocyanats mit einer als Emulsion vorliegenden, Wasser enthaltenden Polyolformulierung feinzellige und gegebenenfalls offenzellige Polyurethanhartschäume erhalten werden.

Gegenstand der Erfindung ist somit ein Verfahren zur Herstellung von feinzelligen Polyurethan- und/oder Polyisocyanurathartschaumstoffen durch Umsetzung
A) eines Polyisocyanats mit einem NCO - Gehalt von 20 bis 48 Gew.% mit
B) einer im Mittel mindestens zwei gegenüber Isocyanat reaktive Gruppen aufweisenden, als Emulsion vorliegenden Polyolkomponente enthaltend
   1)
      a) mindestens ein mit Wasser nicht mischbares mindestens difunktionelles Polyol mit einem zahlen mittleren Molekulargewicht von 150 bis 12.500 g/mol,
      b) mindestens ein Polyesterpolyol oder Polyetheresterpolyol mit einem zahlen mittleren Molekulargewicht von 100 bis 30.000 g/mol,
   2) Wasser,
   3) Katalysator,
   4) gegebenfalls Hilfs- und Zusatzstoffe

Gegenstand der Erfindung ist weiterhin ein Polyurethan- oder Polyisocyanuratformschaum mit einer nach DIN ISO 4590-92 gemessenen Offenzelligkeit >85%, bevorzugt >90% bei einem Verdichtungsgrad >3 %, bezogen auf die Mindestfüll-menge. Dieser Schaum kann durch das erfindungsgemäße Verfahren hergestellt werden.

Erfindungsgemäße Polyolformulierungen enthalten mindestens ein mit Wasser nicht mischbares mindestens difunktionelles Polyol, also mit mindestens zwei gegenüber Isocyanat reaktiven, Wasserstoffatome aufweisenden funktionellen Gruppen, und einem zahlenmittleren Molekulargewicht von 150 bis 12.500 g/mol, vorzugsweise 200 bis 1500 g/mol. Beispiele hierfür sind Triglyceride, z.B. Rizinusöl oder durch Umesterungs-/Amidierungsreaktionen mit ein oder mehrwertigen Alkoholen oder Aminen modiziertes Rizinusöl, oder Fettsäuren wie Stearinsäure, Ölsäure, Linolsäure oder Rizinolsäure. Die Polyolformulierung enthält 5 bis 99 Gewichtsteile, bevorzugt 20 - 80 Gewichtsteile dieser Komponente.

Um die für die Verschäumung notwendige Funktionalität zu erreichen, enthalten erfindungsgemäße Polyolformulierungen mindestens ein Polyol, das mindestens zwei gegenüber Isocyanaten reaktive Wasserstoffatome und ein zahlenmittleres Molekulargewicht von 150 bis 12.500 g/mol, vorzugsweise 200 bis 1500 g/mol aufweist. Solche Polyole können erhalten werden durch Polyaddition von Alkylenoxiden wie beispielsweise Ethylenoxid, Propylenoxid, Butylenoxid, Dodecyloxid oder Styroloxid, vorzugsweise Propylenoxid oder Ethylenoxid, an Starterverbindungen wie Wasser oder mehrwertige Alkohole wie Sucrose, Sorbitol, Pentaerythrit, Trimethylolpropan, Glycerin, Propylenglykol, Ethylenglykol, Diethylenglykol sowie Mischungen aus den genannten Starterverbindungen. Als Starterverbindungen können auch Ammoniak oder Verbindungen verwendet werden, die mindestens eine primäre, sekundäre oder tertiäre Aminogruppe aufweisen, beispielsweise aliphatische Amine wie Ethylendiamin, Oligomere des Ethylendiamins (z.B. Diethylentriamin, Triethylentetramin oder Pentaethylenhexamin), Ethanolamin, Diethanolamin, Triethanolamin, N-Methyl- oder N-Ethyl-diethanolamin, 1,3-Propylendiamin, 1,3- bzw. 1,4-Butylendiamin, 1,2-Hexamethylendiamin, 1,3-Hexamethylendiamin, 1,4-Hexamethylendiamin, 1,5-Hexamethylendiamin oder 1,6-Hexamethylendiamin, aromatische Amine wie Phenylendiamine, Toluylendiamine (2,3-Toluylendiamin, 3,4-Toluylendiamin, 2,4-Toluylendiamin, 2,5-Toluylendiamin, 2,6-Toluylendiamin oder Gemische der genannten Isomeren), 2,2'- Diaminodiphenylmethan, 2,4'-Diaminodiphenylmethan, 4,4'-Diaminodiphenylmethan oder Gemische dieser Isomeren. Die Polyolformulierung enthält 0 bis 95 Gewichtsteile, bevorzugt 10-40 Gewichtsteile dieser Komponente.

Erfindungsgemäße Polyolformulierungen enthalten auch Polyesterpolyole oder Polyetheresterpolyole mit einem zahlenmittleren Molekulargewicht von 100 bis 30.000 g/mol, bevorzugt 150 bis 10.000 g/mol, besonders bevorzugt 200 bis 600 g/mol . Die Polyesterpolyole können aus aromatischen und/oder aliphatischen Dicarbonsäuren und mindestens zwei Hydroxylgruppen aufweisenden Polyolen hergestellt werden. Beispiele für Dicarbonsäuren sind Phthalsäure, Fumarsäure, Maleinsäure, Azelainsäure, Glutarsäure, Adipinsäure, Korksäure, Terephthalsäure, Isophthalsäure, Decandicarbonsäure, Malonsäure, Glutarsäure und Bernsteinsäure. Es können einzelne Dicarbonsäuren sowie beliebige Mischungen verschiedener Dicarbonsäuren eingesetzt werden. Anstelle der freien Dicarbonsäuren können auch die entsprechenden Dicarbonsäurederivate, wie z.B. Dicarbonsäuremono- oder diester von Alkoholen mit ein bis vier Kohlenstoffatomen oder Dicarbonsäureanhydride eingesetzt werden. Als Alkoholkomponente zur Veresterung werden vorzugsweise verwendet: Ethylenglykol, Diethylenglykol, Triethylenglykol, Tetraethylenglykol, 1,2-Propandiol, 1,3-Propandiol, 1,4-Butandiol, 1,5-Pentandiol, 1,6-Hexandiol, 1,10-Decandiol, Glycerin, Trimethylolpropan, bzw. Mischungen daraus. Die erfindungsgemäßen Polyolformulierungen können auch Polyetherester enthalten, wie sie z.B. gemäß EP-A 250 967 durch Reaktion von Phthalsäureanhydrid mit Diethylenglykol und nachfolgend mit Ethylenoxid erhältlich sind. Die Polyolformulierung enthält bis 90, bevorzugt 5 bis 30 Gewichtsteile Polyesterpolyol.

Die erfindungsgemäßen Polyolformulierungen enthalten auch mindestens einen Katalysator. In Mengen von 0 bis 10 Gewichtsteilen, bevorzugt 0,5 bis 5 Gewichtsteilen. Erfindungsgemäß können die in der Polyurethanchemie üblichen Katalysatoren verwendet werden. Beispiele für derartige Katylysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)-hexahydrotriazin, Dimethylaminopropylformamid, N,N,N',N'-Tetramethylethylendiamin, N,N,N',N'-Tetrametylbutandiamin, Tetrametylhexandiamin, Pentamethyldiethylentriamin, Tetramethyldiaminoethylether, Dimethylpiperazin, 1,2-Dimethylimidazol, 1-Azabicyclo[3,3,0]octan, Bis-(dimethylaminopropyl)-harnstoff, N-Methylmorpholin, N-Ethylmorpholin, N-Cyclohexylmorpholin, 2,3-Dimethyl-3,4,5,6,-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Kaliumacetat, Natriumacetat, Natriumhydroxid oder Gemische dieser oder ähnlicher Katalysatoren.

Erfindungsgemäß können auch ionische und nichtionische Emulgatoren im Mengen von 0 bis 10 Gewichtsteilen, bevorzugt 0,5 bis 2 Gewichtsteilen mitverwendet werden. Solche Emulgatoren sind beispielsweise in "Römpp Chemie Lexikon", Band 2, Thieme Verlag Stuttgart, 9. Auflage 1991, S. 1156ff. beschrieben.

Die erfindungsgemäße Polyolkomponente enthält 0,1 bis 10 Gewichtsteile, bevorzugt 0,5 bis 5 Gewichtsteile Wasser.

Wesentlich für das erfindungsgemäße Verfahren ist, daß die Polyolkomponente als Emulsion eingesetzt wird. Dies bedeutet, daß zumindest einer der Bestandteile der Polyolkomponente nicht mit den übrigen Bestandteilen mischbar sein darf, d.h. in der Regel, daß zumindest eine nicht wasserlösliche bzw. mit Wasser mischbare, gegenüber Isocyanat reaktive Wasserstoffatome aufweisende Verbindung enthalten ist. Es hat sich gezeigt, daß der Einsatz einer als Emulsion vorliegenden Polyolkomponente zu wesentlich feinzelligeren Schäumen führt.

Als Isocyanat-Komponente können aromatische Polyisocyanate eingesetzt werden, wie sie in Justus Liebigs Annalen der Chemie, 562 (1949) 75 beschrieben werden, beispielsweise solche der Formel

Q(NCO)ₙ,

wobei
- n: Werte von 2 bis 4, vorzugsweise 2 annehmen kann, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 8 bis 15, vorzugsweise 8 bis 13 C-Atomen bedeutet.

Bevorzugt sind Polyisocyanate, wie sie in DE-OS 28 32 253 beschrieben werden. Besonders bevorzugt eingesetzt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere modifizierte Polyisocyanate, die sich vom 2,4- und 2,6-Toluylendiisocyanat bzw. vom 4,4'- und/oder 2,4'-Diphenylmethandiisocyanat ableiten.

Verwendet werden können auch Prepolymere aus den genannten Isocyanaten und organischen Verbindungen mit mindestens einer Hydroxylgruppe. Beispielhaft genannt seien ein bis vier Hydroxylgruppen aufweisende Polyol- oder Polyester mit (zahlenmittleren) Molekulargewichten von 60 bis 1.400.

Mitverwendet werden können auch Paraffine oder Fettalkohole oder Dimethylpolysiloxane sowie Pigmente oder Farbstoffe, ferner Stabilisatoren gegen Alterungsund Witterungseinflüsse, Weichmacher und fungistatisch und bakteriostatisch wirkende Substanzen sowie Füllstoffe wie Bariumsulfat, Kieselgur, Ruß oder Schlämmkreide. Diese werden meist der Polyolkomponente in Mengen von 0 bis 10 Gewichtsteilen, bevorzugt 0 bis 5 Gewichtsteilen zugesetzt.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Farbstoffen und Füllstoffen sowie fungistatisch und bakteriostatisch wirksamen Substanzen sowie Einzelheiten über Verwendungs- und Wirkungsweise dieser Zusatzmittel sind in Vieweg/Höchtlen (Hrsg.):"Kunststoff-Handbuch", Band VII, Carl Hanser Verlag, München 1966, Seiten 121 bis 205, und G. Oertel (Hrsg.):"Kunststoff-Handbuch", Band VII, Carl Hanser Verlag, 2. Auflage, München 1983 beschrieben.

Die erfindungsgemäßen Polyurethan- oder Polyisocyanuratformschäume weisen eine nach DIN ISO 4590-92 gemessene Offenzelligkeit >85%, bevorzugt >90% auf und einem Verdichtungsgrad >3 %, bezogen auf die Mindestfüllmenge. Die Mindestfüllmenge eines Formkörpers ist die Menge an fertig reagiertem Polyurethanhartschaumstoff, die notwendig ist, um die Form gerade zu füllen.

Gegenstand der Erfindung ist auch die Verwendung der erfindungsgemäßen Hartschaumstoffe als Zwischenschicht für Verbundelemente, als Füllsubstrate für Vakuumisolationspaneele und zum Ausschäumen von Hohlräumen von Kühlhäusern sowie im Containerbau.

Vorzugsweise wird das erfindungsgemäße Verfahren zur Ausschäumung von Hohlräumen von Kühl- und Gefriergeräten verwendet. Es kann auch in der Wärmeisolierung, z.B. von Heißwasserspeichern oder Femwärmerohren, eingesetzt werden. Selbstverständlich können auch Schaumstoffe durch Blockverschäumung oder nach dem an sich bekannten Doppeltransportverfahren ( s. "Kunststoffhandbuch", Band 7: Polyurethane, Carl Hanser Verlag, München Wien, 3. Auflage 1993, S. 148) hergestellt werden.

### Beispiele

- Polyol A:: Polyethylenoxidpolyether (Mₙ =300) auf Basis Trimethylolpropan
- Polyol B:: Polyetherester (Mₙ =375) auf Basis von Phthalsäureanhydrid, Diethylenglykol und Ethylenoxid
- Polyol C:: Rizinusöl [Fa. Alberding + Boley, Krefeld]
- Isocyanat:: Polyphenylpolymethylenpolyisocyanat, NCO-Gehalt 31,5 Gew.-% (Desmodur® 44V20, Bayer AG)
- Stabilisator:: Silikonstabilisator (Tegostab B 8404, Th. Goldschmidt AG, Essen)
- Emulgator:: Natriumsulfatsalz eines ethoxylierten Fettsäurelkohols, 30 Gew.-% in Wasser (Fa. Servo, NL-Delden)]
- Katalysator 1:: Dimethylcyclohexylamin
- Katalysator 2:: Kaliumacetat (25 Gew.-% in Diethylenglykol)

Die Verschäumungen erfolgten auf einer Hochdruckmaschine HK 165 der Fa. Hennecke. Es wurden jeweils zwei Probenkörper hergestellt:
- Probenkörper 1:: Freigeschäumter Block der Dimension 50 x 50 x 40 cm³
- Probenkörper 2:: Formverschäumter Probenkörper der Dimension 9 x 40 x 70 cm³; Verdichtungsgrad 8%

### Beispiel 1 (Vergleichsbeispiel)

100 Gew.-Teile einer Mischung aus 92 Gew.-Teilen Polyol C, 2,5 Gew.-Teilen Katalysator 1, 1 Gew.-Teil Katalysator 2, 2,5 Gew.-Teilen Wasser und 2 Gew.-Teilen Stabilisator werden mit 145 Gew.-Teilen Isocyanat zur Reaktion gebracht. Die Polyolmischung ist eine weiße Emulsion.
- Probenkörper 1:: Rohdichte 52 kg/m³;
Offenzelligkeit (DIN ISO 4590-92): 95 %,
Zellgröße gemäß lichtmikroskopischer Aufnahme 100 µm
- Probenkörper 2:: Rohdichte: 75 kg/m³;
Offenzelligkeit (DIN ISO 4590-92): 93%;
Zellgröße gemäß lichtmikroskopischer Aufnahme: 90 µm

### Beispiel 2 (erfindungsgemäß)

100 Gew.-Teile einer Mischung aus 19,2 Gew.-Teilen Polyol A, 19,7 Gew.-Teilen Polyol B, 57,7 Gew.-Teilen Polyol C, 0,8 Gew.-Teilen Katalysator 1, 0,9 Gew.-Teilen Katalysator 2, 3,6 Gew.-Teilen Emulgator, 0,9 Gew.-Teilen Wasser und 1,4 Gew.-Teilen Stabilisator werden mit 127 Gew.-Teilen Isocyanat zur Reaktion gebracht. Die Polyolmischung ist eine weiße Emulsion.
- Probenkörper 1:: Rohdichte 46 kg/m³;
Offenzelligkeit (DIN ISO 4590-92): 98 %,
Zellgröße gemäß lichtmikroskopischer Aufnahme 90 µm
- Probenkörper 2:: Rohdichte: 69 kg/m³;
Offenzelligkeit (DIN ISO 4590-92): 96%;
Zellgröße gemäß lichtmikroskopischer Aufnahme: 80 µm

### Beispiel 3 (Vergleichsbeispiel)

100 Gew.-Teile einer Mischung aus 46.3 Gew.-Teilen Polyol A, 46.3 Gew.-Teilen Polyol B, 2,5 Gew.-Teilen Katalysator 1, 1 Gew.-Teilen Katalysator 2, 2 Gew.-Teilen Wasser und 2 Gew.-Teilen Stabilisator werden mit 127 Gew.-Teilen Isocyanat zur Reaktion gebracht. Die Polyolmischung ist eine klare Lösung.
- Probenkörper 1:: Rohdichte 46 kg/m³;
Offenzelligkeit (DIN ISO 4590-92): 9 %,
Zellgröße gemäß lichtmikroskopischer Aufnahme 160 µm
- Probenkörper 2:: Rohdichte: 69 kg/m³;
Offenzelligkeit (DIN ISO 4590-92): 9%;
Zellgröße gemäß lichtmikroskopischer Aufnahme: 150 µm

Die Beispiele zeigen, daß bei Einsatz von Polyolemulsionen besonders feinzellige Hartschaumstoffe erhalten werden.

## Patentansprüche

1. Verfahren zur Herstellung von feinzelligen Polyurethan- und/oder Polyisocyanurathartschaumstoffen durch Umsetzung
A) eines Polyisocyanats mit einem NCO-Gehalt von 20 bis 48 Gew.-% mit
B) einer im Mittel mindestens zwei gegenüber Isocyanat reaktive Gruppen aufweisenden, als Emulsion vorliegenden Polyolkomponente enthaltend
1)
a) mindestens ein mit Wasser nicht mischbares mindestens difunktionelles Polyol mit einem zahlenmittleren Molekulargewicht von 150 bis 12.500 g/mol,
b) mindestens ein Polyesterpolyol oder Polyetheresterpolyol mit einem zahlenmittleren Molekulargewicht von 100 bis 30.000 g/mol,
2) Wasser,
3) Katalysator,
4) gegebenenfalls Hilfs- und Zusatzstoffe.

2. Verfahren zur Herstellung von feinzelligen Polyurethan- und/oder Polyisocyanurathartschaumstoffen durch Umsetzung
A) eines Polyisocyanats mit einem NCO-Gehalt von 20 bis 48 Gew.-% mit
B) einer im Mittel mindestens zwei gegenüber Isocyanat reaktive Gruppen aufweisenden, als Emulsion vorliegenden Polyolkomponente enthaltend
1)
a) mindestens ein mit Wasser nicht mischbares Polymer mit mindestens einer gegenüber Isocyanat reaktiven, Wasserstoffatome aufweisenden funktionellen Gruppe und einem zahlenmittleren Molekulargewicht von 150 bis 12.500 g/mol,
b) mindestens ein mindestens zwei gegenüber Isocyanat reaktive Wasserstoffatome aufweisendes Polyetherpolyol mit einem zahlenmittleren Molekulargewicht von 150 bis 12.500 g/mol,
c) mindestens ein Polyesterpolyol oder Polyetheresterpolyol mit einem zahlenmittleren Molekulargewicht von 100 bis 30.000 g/mol,
2) Wasser,
3) Katalysator,
4) gegebenenfalls Hifs- und Zusatzstoffe.

3. Verwendung des nach Anspruch 1 oder 2 hergestellten Schaums als Zwischenschicht für Verbundelemente, als Füllsubstrat für Vakuumisolierpaneele oder als Isoliermaterial für Kältegeräte.

4. Polyurethan- oder Polyisocyanuratformschaum mit einer nach DIN ISO 4590-92 gemessenen Offenzelligkeit >85 %, und einem Verdichtungsgrad >3 %, bezogen auf die Mindestfüllmenge, erhältlich gemäß Anspruch 1 oder 2.

## Claims

1. Process for the production of finely cellular rigid polyurethane and/or polyisocyanurate foams by the reaction of
A) a polyisocyanate having an NCO content of 20 to 48 wt.% with
B) a polyol component in the form of an emulsion, having on average at least two groups which are reactive with isocyanate and containing
1)
a)at least one polyol that is at least difunctional and is immiscible with water and that has a number average molecular weight of 150 to 12,500 g/mole,
b)at least one polyester polyol or polyether ester polyol with a number average molecular weight of 100 to 30,000 g/mole,
2) water,
3) catalyst,
4) optionally auxiliary substances and additives.

2. Process for the production of finely cellular rigid polyurethane and/or polyisocyanurate foams by the reaction of
A) a polyisocyanate having an NCO content of 20 to 48 wt.% with
B) a polyol component present as emulsion, having on average at least two groups reactive to isocyanate and containing
1)
a)at least one polymer immiscible with water with at least one functional group comprising hydrogen atoms reactive to isocyanate and having a number average molecular weight of 150 to 12,500 g/mole,
b) at least one polyether polyol comprising at least two hydrogen atoms reactive to isocyanate and having a number average molecular weight of 150 to 12,500 g/mole,
c) at least one polyester polyol or polyether ester polyol with a number average molecular weight of 100 to 30,000 g/mole
2) water,
3) catalyst,
4) optionally auxiliary substances and additives.

3. Use of the foam produced according to claim 1 or 2 as an intermediate layer for composite elements, as filling substrate for vacuum insulating panels and as insulating material for refrigeration equipment.

4. Polyurethane or polyisocyanurate foam produced in the mould, having a proportion of open cells, measured in accordance with DIN ISO 4590-92, of >85%, and a degree of compression of >3%, based on the minimum amount of filling, obtainable according to claim 1 or 2.

## Revendications

1. Procédé pour la préparation de mousses rigides de polyuréthane et/ou de polyisocyanurate à alvéoles fines par réaction de
A) un polyisocyanate avec une teneur en NCO de 20 à 48 % en poids avec
B) un constituant polyol présentant en moyenne au moins deux groupes réactifs par rapport à l'isocyanate, présent dans la forme d'une émulsion contenant
1)
a) au moins un polyol au moins difonctionnel non miscible à l'eau avec un poids moléculaire moyen en nombre de 150 à 12 500 g/mol,
b) au moins un polyesterpolyol ou un polyétheresterpolyol avec un poids moléculaire moyen en nombre de 100 à 30 000 g/mol,
2) de l'eau,
3) un catalyseur,
4) éventuellement des auxiliaires et des additifs.

2. Procédé pour la préparation de mousses rigides de polyuréthane et/ou de polyisocyanurate à alvéoles fines par réaction de
A) un polyisocyanate avec une teneur en NCO de 20 à 48 % en poids avec
B) un constituant polyol présentant en moyenne au moins deux groupes réactifs par rapport à l'isocyanate, présent dans la forme d'une émulsion contenant
1)
a) au moins un polymère non miscible à l'eau avec au moins un groupe fonctionnel présentant des atomes d'hydrogène réactifs par rapport à l'isocyanate et un poids moléculaire moyen en nombre de 150 à 12 500 g/mol, .
b) au moins un polyétherpolyol présentant au moins 2 atomes d'hydrogène réactifs par rapport à l'isocyanate avec un poids moléculaire moyen en nombre de 150 à 12 500 g/mol,
c) au moins un polyesterpolyol ou polyétheresterpolyol avec un poids moléculaire moyen en nombre de 100 à 30 000 g/mol, Le A 33 538 (00 906 260.5)
2) de l'eau,
3) un catalyseur,
4) éventuellement des auxiliaires et des additifs.

3. Utilisation de la mousse préparée selon la revendication 1 ou 2 comme couche intermédiaire pour des éléments composites, comme substrat de remplissage pour des panneaux d'isolation sous vide ou comme matériau isolant pour des appareils réfrigérants.

4. Mousse moulée de polyuréthane ou de polyisocyanurate avec une ouverture d'alvéoles mesurée selon DIN ISO 4590-92 >85 % et un degré de compactage >3 %, rapporté à la quantité minimale de remplissage, obtenue selon la revendication 1 ou la revendication 2.
